# EUROPÄISCHE PATENTSCHRIFT

(11) **EP 3 974 263 B1**
(45) Veröffentlichungstag und Bekanntmachung des Hinweises auf die Patenterteilung: **16.07.2025**
(21) Anmeldenummer: 21199205.2
(22) Anmeldetag: 27.09.2021
(51) Int. Cl.: B60R 25/00, B60D 1/60

(54) **MOBILES SICHERUNGSSYSTEM FÜR FAHRZEUGANHÄNGER**
MOBILE SECURING SYSTEM FOR VEHICLE TRAILERS
SYSTÈME DE SÉCURITÉ MOBILE POUR REMORQUES DE VÉHICULE

(30) Priorität: 29.09.2020 DE 202020105586 U
(43) Veröffentlichungstag der Anmeldung: 30.03.2022
(73) Patentinhaber: Leuthold, Lutz, 01471 Radeburg OT Großdittmannsdorf (DE)
(72) Erfinder: LEUTHOLD, Lutz, 01471 Radeburg OT Großdittmannsdorf (DE)
(74) Vertreter: Schied, Sebastian

(56) Entgegenhaltungen:
- AU-A1- 2016 201 296
- CN-U- 208 947 007
- DE-U1- 202018 107 410
- DE-U1- 8 519 623
- GB-A- 2 298 675
- NL-C1- 1 022 377
- SE-A1- 1 551 088
- US-B1- 10 500 911
- US-B2- 8 689 594

## Beschreibung

Sicherungssystem für Fahrzeuganhänger zur kontrollierten Freigabe des Fahrzeuganhängers insbesondere für die unbeaufsichtigten Ausgabe und Rückgabe, beispielsweise einer Vermietung.

Es sind bereits unterschiedliche Sicherungssysteme für Fahrzeuganhänger bekannt.

Die US 10 500 911 B1 offenbart ein mobiles Sicherungssystem nach dem Oberbegriff von Anspruch 1.

Die DE 6 89 09 872 U1, die DE 85 16 623 U1 und die EP 1 008 469 B1 offenbaren jeweils ein Verriegelungsgehäuse, welche auf die Kupplungsstange bzw. das Kupplungsmaul geschoben werden und mittels Sicherheitsschloss gesichert werden. Die DE 200 12 461 U1 offenbart ein zweiteiliges Steckschloss, welches mittels eines Kombinationsschlosses mechanisch verriegelbar ist.

Die bekannten Sicherungssysteme haben den Nachteil, dass ein Schlüssel benötigt wird, der jeweils übergeben werden muss oder deponiert werden muss. Schlüssel können jedoch abrechen oder verloren gehen, wodurch eine weitere Nutzung unmöglich, erschwert oder verzögert wird. Kombinationen von Zahlenschlössern lassen sich ändern. Dies kann jedoch auch vom Nutzer unberechtigt erfolgen, wodurch eine weitere Nutzung erschwert oder unmöglich wird. Ein Zugang kann gegebenenfalls nur über eine Zerstörung des Sicherungssystems erfolgen.

Somit ist ein flexibles Nutzen oder Vermieten von Anhängern nicht oder nur sehr aufwendig möglich.

Aufgabe der Erfindung ist es ein mobiles Sicherungssystem für an Zugfahrzeuge kuppelbare Fahrzeuganhänger zu schaffen, wobei einerseits das unberechtigte Nutzen vermieden und zugleich eine unbeaufsichtigte Ausgabe und Rückgabe und eine Überwachung dessen ermöglicht wird.

Mit der Erfindung wird im angegebenen Anwendungsfall erreicht, dass ein mobiles Sicherungssystem für an Zugfahrzeuge kuppelbare Fahrzeuganhänger geschaffen wird, wobei eine am oder um das Zugmaul und/oder die Deichsel anordbare Schlossanordnung vorgesehen ist und die Schlossanordnung mittels eines elektromechanischen Schlosses oder Schließsystems für den Berechtigten entsperrbar und/oder sperrbar ist, wobei ein Schließriegel des Schlosses oder des Schließsystems zumindest in Schließstellung blockierbar ist und somit der Fahrzeuganhänger zuverlässig gegen ein unberechtigtes Benutzen gesichert ist und bei Bedarf an den Berechtigten gegeben oder freigegeben werden kann. Es ergibt sich damit die Möglichkeit, Fahrzeuganhänger ohne zusätzliches Personal und ohne ein aufwändiges und fehleranfälliges Schlüsselsystem vermieten zu können, die Mietzeit zu erfassen und auch die Abgabe nach der Mietzeit zu ermöglichen.

Unter einem elektromechanischen Schloss wird auch ein elektronisch ansteuerbares Schloss verstanden. Derartige Schlösser können mit einer Batterie und/oder über ein Energieversorgungsnetz gespeist werden.

Die Blockierung des Schließriegels kann elektromagnetisch oder mittels eines Antriebes aktiviert und/oder gelöst werden.

Auch können in Schließstellung selbsttätig, beispielsweise mittels Schwerkraft oder mittels Federkraft fallende Verriegelungen zum Einsatz kommen, welche sich nur aktiv, beispielsweise mittels zumindest eines Antriebes oder zumindest eines Elektromagneten, entriegeln lassen.

Weiterhin können für die Blockierung des Schließriegels auch Motoren mit einer Blockierung oder Verriegelung oder einem blockierenden Getriebe zum Einsatz kommen.

Somit ist eine vorteilhafte Verwendung des Sicherungssystem für Fahrzeuganhänger für eine unbeaufsichtigten Ausgabe und Rückgabe und eine Überwachung von Fahrzeuganhängern möglich, wobei sich die Fahrzeuganhänger an jeweils gleichen oder beliebigen Standorten entnehmen und/oder abgeben und die entsprechende Schlossanordnung entsperren oder sperren lassen. Die Ausgabe und Rückgabe und eine Überwachung von Fahrzeuganhängern kann dabei beispielsweise in der Form einer Miete oder einer Leihe oder im betrieblichen Umfeld in der kontrollierten Nutzung erfolgen. So lassen sich Vermietstationen oder größere Fahrzeuganhängerpools mit dem Sicherungssystem für die jeweiligen Fahrzeuganhänger ausstatten.

Vorteilhafte Ausgestaltungen der Erfindung sind in den Unteransprüchen dargestellt.

Indem der Schließriegel eingehaust oder umhaust ist, wird der unberechtigte, zerstörerische Zugriff auf den Schließriegel sowie eine Manipulation erschwert.

Das Sicherungssystem erfährt eine Weiterbildung, indem die Schlossanordnung mit einem Bauwerk verbindbar ist. Das Bauwerk kann ein Carport oder Gebäude oder eine Komponente eines Carports oder Gebäudes oder eine Säule, ein Zaun oder eine Mauer oder Wand sein, wodurch sich somit die Fahrzeuganhänger einerseits über die Schlossanordnung zuverlässig an verschiedenen geeigneten Orten abstellen bzw. vorhalten und sichern lassen und anderseits die Fahrzeuganhänger gegen Witterungseinflüsse geschützt sind.

Indem die Schlossanordnung oder das Bauwerk einen Kupplungskugelkopf aufweist wird die Sicherung verbessert, da im Zusammenhang mit einer entsprechenden Schlossanordnung ein unberechtigtes Bewegen und Entfernen des Fahrzeuganhängers noch besser verhindert wird. Zudem wird eine definierte Lage und Stellung des Anhängers erreicht.

Indem das Schloss oder die Schlossanordnung durch den Berechtigten, vorzugsweise kontaktlos und/oder durch einen Dritten oder remote also ferngesteuert oder fernbedient entsperrbar und sperrbar ist, wird die unbeaufsichtigten Ausgabe und Rückgabe verbessert, da entsprechend erforderliche Zugänge vorgehalten oder an den Berechtigten übermittelt werden. Es ist zudem auch vorgesehen und möglich, dass eine Fernausgabe und Fernrückgabe erfolgt.

Weiterhin ist es vorgesehen, dass das Schloss mittels eines Zugfahrzeuges entsperrbar und sperrbar ist. Durch die zunehmende Vernetzung von Fahrzeugen sowie von Fahrzeugen mit dem jeweiligen Nutzer lässt sich die Berechtigung zum Entsperren auch über oder durch das dem Nutzer zugeordnete Zugfahrzeug an das Schloss übermitteln bzw. das Entsperren auslösen. Ebenso kann das Sperren erfolgen. So lässt sich das Zugfahrzeug für das Entsperren oder Sperren mit dem Schloss drahtgebunden oder drahtlos koppeln.

Unter Verwendung von beispielsweise den nahezu allgegenwärtigen mobilen Endgeräten lässt sich die Vermietung entsprechend vereinfachen, so dass physische Schlüssel nicht zwingend erforderlich sind. Auch ist über mobile Endgeräte bzw. über eine entsprechende Anwendung eine Kontrolle und Überwachung der Vermietung sowie des Fahrzeuganhängers möglich. So kann eine Kommunikation des mobilen Endgerätes mit dem Schloss bzw. Sicherungssystem mittels Bluetooth oder NFC oder WLAN oder einer anderen Funkschnittstelle oder anderen drahtlosen oder vergleichbaren Kommunikationstechnologie erfolgen, welche die berechtigte Steuerung bzw. Bedienung des Schlosses ermöglicht.

Alternativ oder zusätzlich können Transponder oder andere geeignete transponderähnliche mobile Komponenten zum Einsatz kommen, mittels derer sich das Schloss bedienen lässt. Vorteilhaft umfasst das Schloss beispielweise eine Funkschnittstelle als drahtlose Kommunikationsschnittstelle mittels derer Transponder erkannt und ausgelesen werden können.

Die Transponder können eine RFID-Technologie oder eine andere kontaktlose Funktechnologie oder eine funkähnliche Technologie nutzen.

Unter kontaktlos wird neben der beabstandeten Nutzung auch das Auflegen oder Anlegen eines mobilen Endgerätes oder eines Transponders oder der transponderähnlichen mobilen Komponente zu Benutzung also zur Erkennung der berechtigten Steuerung bzw. Bedienung am Schloss oder einer entsprechenden gegebenenfalls vorhandenen Erfassungsfläche oder einem Leser verstanden.

Neben dem Entsperren und Sperren des Schlosses kann zusätzlich oder alternativ auch die Nutzungszeit erfasst und für eine Vergütung vorgehalten oder an eine Datenerfassungs- und/oder Datenverarbeitungseinheit weitergeleitet. Dies kann auch zeitversetzt erfolgen, wenn beispielsweise ein Internetzugang nicht verfügbar ist.

Indem zumindest das Schloss oder die Schlossanordnung und/oder das Bauwerk und/oder der Fahrzeuganhänger zumindest eine drahtgebundene oder drahtlose Kommunikationsschnittstelle umfasst und/oder einen Zugang zum Internet aufweist, lässt sich die unbeaufsichtigte Ausgabe und Rückgabe sowie die Anwesenheitskontrolle des Fahrzeuganhängers verbessern. Es lassen sich darüber Ansteuerungen der Schlossanordnung sowie Berechtigungen individualisieren und aktualisieren. So lässt sich beispielsweise mittels eines Smartphones des Mieters oder einem anderen mobilen Endgerät, wie Smartwatches, Tablet-PC oder anderen Endgerätearten oder anderen Endgerätetechnologien die Schlossanordnung bedienen, wobei das Smartphone über lokale Schnittstellen, insbesondere Funkschnittstellen wie Bluetooth oder NFC und/oder über das Internet oder andere drahtlose oder vergleichbare Kommunikationstechnologien mit der Schlossanordnung kommunizieren kann. So lassen sich Kennungen oder Codes oder andere Mittel austauschen bzw. aktivieren, die den Zugang vereinfachen und/oder sicherer ermöglichen. Somit lassen sich beispielsweise Mietzeiten erfassen und an eine zentrale Stelle beispielsweise zur Abrechnung oder zur anderweitigen Erfassung übermitteln.

Über ein Smartphone, beispielsweise des Mieters kann zudem eine Ortung des Fahrzeuganhängers durchgeführt werden, da vorgesehen werden kann, dass der Fahrzeuganhänger nicht nur zur Übergabe und Abgabe, sondern auch in der Zeit dazwischen regelmäßig mit dem Smartphone kommunizieren kann und über den mobilen Internetzugang des Smartphones eine regelmäßige Status- und Standortinformationen abgefragt oder zumindest erfasst werden. Die Daten lassen sich mittels auch auf dem jeweiligen Smartphone zwischenspeichern. So lassen sich neben Betriebszeiten insbesondere auch die zurückgelegten Distanzen erfassen. Um auf eine regelmäßige Datenübertragung verzichten zu können, lassen sich entsprechend während der Mietzeit erfassten und ggf. zwischengespeicherten Daten auch erst bei Abgabe des Fahrzeuganhängers an eine zentrale Stelle übermitteln bzw. zusammentragen.

Indem zumindest das Schloss oder die Schlossanordnung eine Verbindung zum Zugfahrzeug aufweist, lässt sich das Schloss oder die Schlossanordnung vorteilhaft und zielgerichtet entsperren und/oder sperren. Entsprechend lässt sich das Zugfahrzeug für das Entsperren oder Sperren mit dem Schloss drahtgebunden oder drahtlos koppeln.

Vorteilhaft weist die Schlossanordnung und/oder das Bauwerk und/oder der Fahrzeuganhänger und/oder das Zugfahrzeug zumindest eine Datenerfassungs- und/oder Datenverarbeitungseinheit auf oder weist eine Verbindung oder eine Schnittstelle zu einer Datenerfassungs- und/oder Datenverarbeitungseinheit auf. So lassen sich Zugänge und Nutzungen sowie Berechtigungen lokal oder zentral ablegen, um beispielsweise nicht ständig eine Internetverbindung nutzen zu müssen. Auch lassen sich die Nutzungsdaten, zwischenspeichern und im Bedarfsfalle zeitversetzt an eine zentrale Stelle übermitteln bzw. zusammentragen. Auch lassen sich Überwachungsdaten und Anwesenheitsdaten des Fahrzeuganhängers speichern und auswerten.

Indem eine Datenerfassungs- und/oder Datenverarbeitungseinheit an dem Fahrzeuganhänger vorhanden ist, lassen sich unabhängig vom Mieter oder Nutzer Status- und Standortinformationen, sowie Betriebszeiten und insbesondere auch die zurückgelegten Distanzen erfassen und hinsichtlich einer gegebenenfalls notwendigen Wartung oder Reparatur auch auswerten.

Als Datenerfassungs- und/oder Datenverarbeitungseinheiten kommen beispielsweise verbaute Smartphones oder Microcomputer oder ähnliche oder äquivalente Datenverarbeitungssysteme mit einem bevorzugten geringen Energieverbrauch sowie für den robusten und/oder klimaunabhängigen Einsatz. Damit ergibt sich je nach in Frage kommender Datenerfassungs- und/oder Datenverarbeitungseinheit, dass beispielsweise die Kommunikationsschnittstellen, ein Interzugang und/oder Energiespeicher ein Bestandteil der Datenerfassungs- und/oder Datenverarbeitungseinheiten sein können. Entsprechendes gilt auch für ein Ortungssystem.

Indem eine Energieversorgung für das Schloss oder die Schlossanordnung mittels Energiespeicher und/oder, sofern vorgesehen, über das Bauwerk vorhanden ist, lassen sich die Schlossanordnungen und damit die Fahrzeuganhänger an beliebigen Orten platzieren bzw. vorhalten und mittels des Energiespeichers die Funktionen der Schlossanordnungen autark ermöglichen. Ist jedoch ein entsprechendes Bauwerk mit einem Anschluss an ein Stromnetz vorhanden kann dieses entsprechend die Energieversorgung für die Schlossanordnung sowie gegebenenfalls die Ladung des Energiespeichers übernehmen. Hierfür lässt sich der ohnehin vorhandene Anhängerstecker verwenden, der sich an eine Anhängersteckdose am Bauwerk einstecken lässt, die mit der jeweiligen Energiequelle oder mit dem Stromnetz angepasst verbunden ist.

Weiterhin ist eine Energieversorgung für den Fahrzeuganhänger mittels Energiespeicher und/oder über das Bauwerk vorhanden, so dass insbesondere die Datenerfassungs- und/oder Datenverarbeitungseinheit mit Energie versorgt wird und anderseits der Energiespeicher während der Nutzungspausen bzw. Standzeiten in der Schlossanordnung geladen werden kann.

Als Energiespeicher kommen beispielsweise Batterien, Akkumulatoren, beispielsweise Lithium-Ionen-Akkumulatoren oder andere Akkumulatoren mit einer geringen Empfindlichkeit gegenüber Temperaturschwankungen oder niedrigen Temperaturen in Betracht.

Die lokale Energieversorgung oder auch die Energiespeicher lassen sich mittels Photovoltatikanlagen oder Windkraftanlagen bilden, unterstützen oder erhalten bzw. auf- oder nachladen.

Es kann vorgesehen sein, dass die Energieversorgung und/oder ein Energiespeicher für die Schlossanordnung oder das Schloss über das Zugfahrzeug oder über die Bordelektronik des Zugfahrzeugs vorhanden ist. So lässt sich über die am Zugfahrzeug vorhandene Steckdose für den am Fahrzeuganhänger vorhandenen Fahrzeuganhängerstecker eine Energieversorgung realisieren. Auch lassen sich andere elektrische Energie liefernde Steckdosen oder Anschlüsse im Zugfahrzeug für eine Energieversorgung nutzen. So kommen beispielsweise eine Zigarettenanzünderbuchse oder auch USB-Anschluss für die Energieversorgung in Betracht. Die Steckdose für den Fahrzeuganhängerstecker, die Zigarettenanzünderbuchse sowie den USB-Anschluss sind vorzugsweise mit der Bordelektronik verbunden.

Zudem lassen sich insbesondere über den USB-Anschluss sowie gegebenenfalls auch über Steckdose für den Fahrzeuganhängerstecker oder die Zigarettenanzünderbuchse Datenverbindungen realisieren, wodurch durch den USB-Anschluss sowie gegebenenfalls auch über die Steckdose für den Fahrzeuganhängerstecker oder die Zigarettenanzünderbuchse Kommunikationsschnittstellen gebildet werden, über welche das Schloss entsperrbar und sperrbar ist.

Vorteilhaft ist ein Verbindungskabel oder Energieversorgungskabel von der Schlossanordnung oder dem Schloss zum Zugfahrzeugs vorgesehen, welches zumindest an die Steckdose für den Fahrzeuganhängerstecker oder die Zigarettenanzünderbuchse oder den USB-Anschluss ansteckbar ist. Das Verbindungskabel kann Teil der Schlossanordnung oder des Schlosses sein oder auch an die Schlossanordnung oder das Schloss ansteckbar sein.

Entsprechend der Nutzungsabsichten lassen sich die Fahrzeuganhänger an beliebigen Standorten entnehmen und abgeben und die entsprechende Schlossanordnung entsperren oder sperren.

In dem eine Anwesenheitskontrolle vorgesehen ist, wobei die Anwesenheitskontrolle berührungslos und/oder über die Bordelektronik und/oder über die Verkabelung des Fahrzeuganhängers vorgesehen ist, lassen sich sowohl einfache Kontrollmöglichkeiten mit beispielsweise einer Schleifenmessung über die Verkabelung, zu der auch der Fahrzeuganhängerstecker gehört, als auch mittels Sensoren, welche separat an der Schlossanordnung, am Bauwerk oder Bestandteil der Bordelektronik des Fahrzeuganhängers sind, umsetzen. Die Sensoren sind beispielsweise so angeordnet, dass das Entsperren der Schlossanordnung sowie die Entnahme des Fahrzeuganhängers und auch die Rückgabe des Fahrzeuganhängers und das Sperren der Schlossanordnung erkannt und/oder beispielsweise über die Kommunikationsschnittstelle, das Internet, die Datenerfassungs- und/oder Datenverarbeitungseinheit erfasst oder weitergeleitet werden kann. Ebenso ist eine Anwesenheitskontrolle über die Bordelektronik unter Einbeziehung der Datenerfassungsund/oder Datenverarbeitungseinheit möglich.

Indem an der Schlossanordnung oder am Bauwerk ein Steckanschluss, beispielsweise als Anhängersteckdose für einen Fahrzeuganhängerstecker vorhanden ist, lässt sich der Fahrzeuganhänger über den in den Steckanschluss eingesteckten Fahrzeuganhängerstecker mit seinen Komponenten, wie beispielsweise den Energiespeicher, die Datenerfassungsund/oder Datenverarbeitungseinheit und die Kommunikationsschnittstelle sowie sofern vorhanden die Sensoren mit Energie versorgen und zugleich lässt sich eine Überwachung des Fahrzeuganhängers und dessen Borelektronik realisieren. Eine Schleifenmessung im bzw. über den Fahrzeuganhängerstecker oder eine andere Form der Überwachung wäre mit dem Steckanschluss somit einfacher umsetzbar. So kommen auch Schleifenmessungen aller oder bestimmter oder abwechselnd unterschiedlicher Leuchten der Anhängerbeleuchtung in Betracht.

Mittels der Schleifenmessungen der Leuchten lassen sich diese auch auf Ihre Funktionstüchtigkeit überwachen, um diese bei einem Defekt vor einem Ausleihen gegebenenfalls austauschen zu können.

Indem ein Ortungssystem des Fahrzeuganhängers auslesbar ist, lassen sich Standortdaten, Fahrtrecken und Distanzen und auch Geschwindigkeiten erfassen und auswerten. Somit lassen sich beispielsweise nach den Nutzungsdaten Inspektionen planen und bei Überschreitung der Mietzeit oder bei Diebstahl der Verbleib des Fahrzeuganhängers ermitteln. Das Ortungssystem ist am Fahrzeuganhänger vorhanden oder vorzugsweise ein integrierter Bestandteil der Datenerfassungs- und/oder Datenverarbeitungseinheit. Ist neben dem Ortungssystem am Fahrzeuganhänger zudem eine Kommunikationsschnittstelle daran vorhanden, lassen sich Informationen anhand der durch die Ortungsfunktion möglichen Geschwindigkeitserfassung und in Verbindung mit der Kommunikationsschnittstelle und/oder der Datenerfassungs- und/oder Datenverarbeitungseinheit Mitteilungen oder Warnungen an den Mieter weitergeben, wenn beispielsweise ein zulässiges Gesamtgewicht und/oder die Geschwindigkeit des Fahrzeuganhängers überschritten wird.

Indem zumindest ein beleuchteter Werbeträger oder eine beleuchtete Werbefläche am Fahrzeuganhänger betreibbar ist, lassen sich zumindest in den Nutzungspausen und beispielsweise im gesperrten Zustand der Schlossanordnung Werbungen anzeigen oder auf eine Fahrzeuganhängervermietung hinweisen.

Die Erfindung umfasst weiterhin ein Schloss oder Schließsystem zur Verwendung am erfindungsgemäßen Sicherungssystem, wobei ein manuell und/oder motorisch schwenkbarer oder linear verschiebbarer Schließriegel vorgesehen ist, der dazu ausgelegt ist einen Stab, Bolzen oder Riegel einer Schlossanordnung innerhalb oder außerhalb des Schlosses zu durchgreifen oder zu hintergreifen. Damit lässt sich das Schloss an unterschiedlichen Ausführungen einer Schlossanordnung einsetzen und je nach Ausführung des sperrenden Elementes als Stab, Bolzen oder Riegel diesen zuverlässig durch ein Hintergreifen, beispielsweise einer Aussparung oder eines Hinterschnitts, oder ein Durchgreifen, beispielsweise einer Bohrung oder Öffnung, oder ein Eingreifen, beispielsweise in eine Vertiefung, sperren oder blockieren.

Dabei kann der Schließriegel geradlinig langestreckt ein Rundprofil oder als eckiges Profil sein oder die Form eines Stabes aufweisen oder auch gebogen oder gekrümmt sein, so dass der Schließriegel schwenkbar, kreisförmig oder bogenförmig oder linear verschiebbar ist. Jedoch kann der Schließriegel auch eine flächige Form aufweisen, welche durch eine entsprechende Bewegung eine Aussparung oder einen Hinterschnitt hintergreift oder bei entsprechender Form auch in eine Bohrung oder Öffnung eingreifen.

Indem der Schließriegel durch ein Gehäuse oder vom Schloss oder vom Schließsystem eingehaust oder umhaust ist, wird der konstruktive Aufbau gegen den unberechtigten, zerstörerischen Zugriff auf den Schließriegel sowie gegen eine Manipulation vereinfacht.

Vorteilhaft lässt sich der Schließriegel motorisch oder elektromagnetisch zum Öffnen oder Entsperren und/oder Schließen oder Sperren bewegen oder auslösen. Beispielsweise sind beispielsweise Linearantriebe wie Spindelmotoren oder Stellmotoren vorgesehen, die den Schließriegel bewegen oder auslösen.

Erfindungsgemäß kann ein Elektromagnet eine Sperre lösen und der Schließriegel wird per Hand betätigt.

Erfindungsgemäß fällt oder schnappt der Schließriegel eigenständig oder selbsttätig durch Schwerkraft oder anderweitig mechanisch in eine blockierende Position, in der der Schließriegel oder das Schloss gesperrt ist.

Beim Entsperren oder Öffnen kann die Schwerkraft oder Federkraft überwunden bzw. dieser entgegen gewirkt werden.

Es können auch unterschiedliche Varianten zum Bewegen oder Auslösen des Schließriegels kombiniert werden.

Vorteilhaft ist das Schloss bzw. die Schlossanordnung von der Schlossanordnung entfernbar, wodurch der Stab, Bolzen oder Riegel fester Bestandteil der Schlossanordnung sein können und somit ein verbesserter Schutz vor Zerstörung ermöglicht wird. Zudem lässt sich das Schloss bzw. die Schlossanordnung bei Bedarf einfach austauschen.

Mehrere Ausführungsbeispiele der Erfindung sind in den Zeichnungen dargestellt und werden im Folgenden näher beschrieben. Es zeigen:
Fig. 1 eine perspektivische Darstellung eines mobilen Sicherungssystems für Fahrzeuganhänger, wobei eine Schlossanordnung mit einem elektromechanischen Schloss vorhanden ist und ein Fahrzeuganhänger, der in der Schlossanordnung gesichert bzw. gesperrt ist,
Fig. 2 eine perspektivische Darstellung eines mobilen Sicherungssystems für Fahrzeuganhänger mit Steckanschluss für einen Fahrzeuganhängerstecker, wobei eine Schlossanordnung mit einem elektromechanischen Schloss vorhanden ist und ein Fahrzeuganhänger, der in der Schlossanordnung gesichert bzw. gesperrt ist,
Fig. 3 die Draufsicht einer Schlossanordnung als Kasten mit elektromechanischem Schloss und mit Zugmaul eines Fahrzeuganhängers, das in der Schlossanordnung gesichert bzw. gesperrt ist,
Fig. 4 die perspektivische Seitenansicht einer Schlossanordnung als Kasten mit elektromechanischem Schloss und mit Zugmaul eines Fahrzeuganhängers, das in der Schlossanordnung gesichert bzw. gesperrt ist und
Fig. 5 die perspektivische Seitenansicht einer Schlossanordnung als beabstandete parallele Wandabschnitte an einem Bauwerk als Wand mit Kupplungskugelkopf und elektromechanischen Schloss und mit Zugmaul eines Fahrzeuganhängers, das in der Schlossanordnung gesichert bzw. gesperrt ist.

Das erfindungsgemäße mobile Sicherungssystem für Fahrzeuganhänger 11, umfasst eine um das Zugmaul 1 und/oder die Deichsel 1 eine Schlossanordnung 3. Die Schlossanordnung 3 ist mittels eines elektromechanischen Schlosses 4 für den Berechtigten entsperrbar und/oder sperrbar, so dass der Fahrzeuganhänger 11 bei Berechtigung und bei Bedarf für eine Benutzung freigegeben werden kann und nach der Benutzung wieder anschließbar ist. Weiterhin lassen sich auch Nutzungszeiträume erfassen, da die Startzeit der Entnahme und die Endzeit bei der Rückgabe erfasst, gegebenenfalls gespeichert bzw. an eine zentrale Erfassung übermittelt werden.

Um die Nutzung oder auch eine unberechtigte Nutzung zu überwachen, kann eine Anwesenheitskontrolle des Fahrzeuganhängers 11 vorgesehen werden. Die Anwesenheitskontrolle kann beispielsweise als Schleifenstrommessung über den Fahrzeuganhänger 11 oder Fahrzeuganhänger 11 oder den Fahrzeuganhängerstecker 12 ausgeführt sein. Die Anwesenheitskontrolle ist vorzugsweise mit einer Kommunikationsschnittstelle 6 und eine Datenverarbeitungseinheit 7 zumindest funktionell verbunden. Es kann somit erfasst werden, ob der Fahrzeuganhänger 11 verfügbar oder in Benutzung ist. Zudem lässt sich auch der Versuch des unberechtigten Entnehmens bzw. Entfernens überwachen bzw. erkennen. Die Kommunikationsschnittstelle 6 kann vorzugsweise eine Verbindung zum mobilen Internet und/oder zu einem kabellosen lokalen Netzwerk herstellen. Somit lassen sich die Anwesenheitsdaten an den Eigentümer oder Vermieter übermitteln.

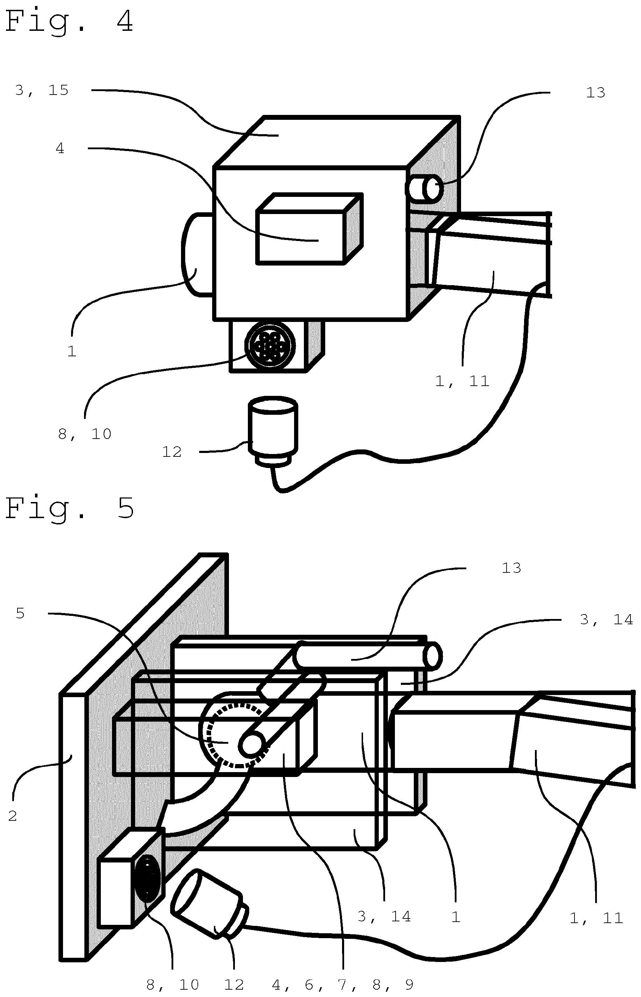

Das erfindungsgemäße mobile Sicherungssystem für Fahrzeuganhänger 11 kann einem Bauwerk angeordnet werden. Das Bauwerk 2 kann ein Carport oder Gebäude oder eine Komponente, wie eine Wand eines Carports oder Gebäudes sein. So lässt sich eine Überdachung für die Fahrzeuganhänger 11 bei gleichzeitiger Sicherung umsetzen. Das Bauwerk kann weiterhin eine Säule sein. Ebenso kann das Bauwerk 2 ein Zaun oder eine Mauer oder freistehende Wand sein, wie sie in der Figur 5 dargestellt ist.

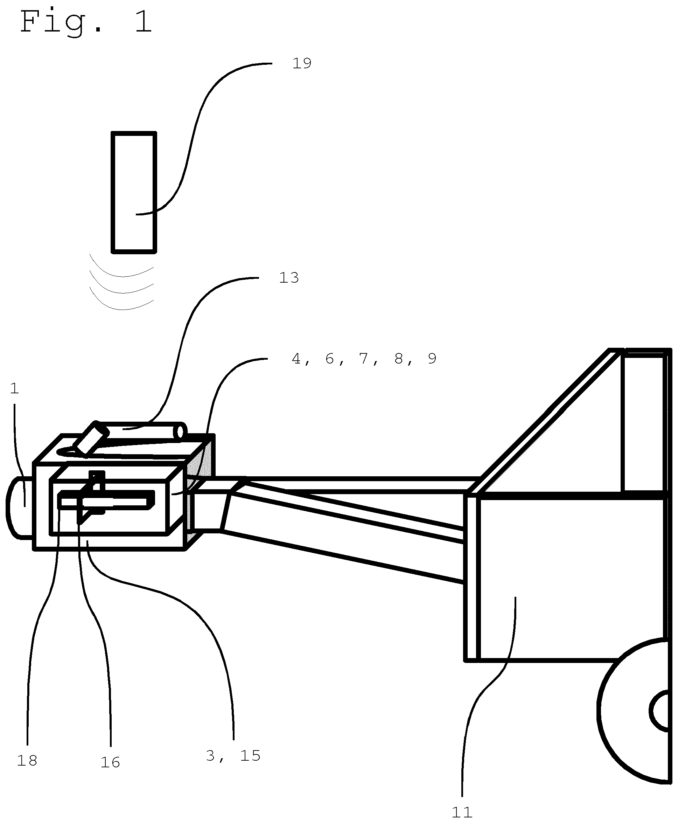

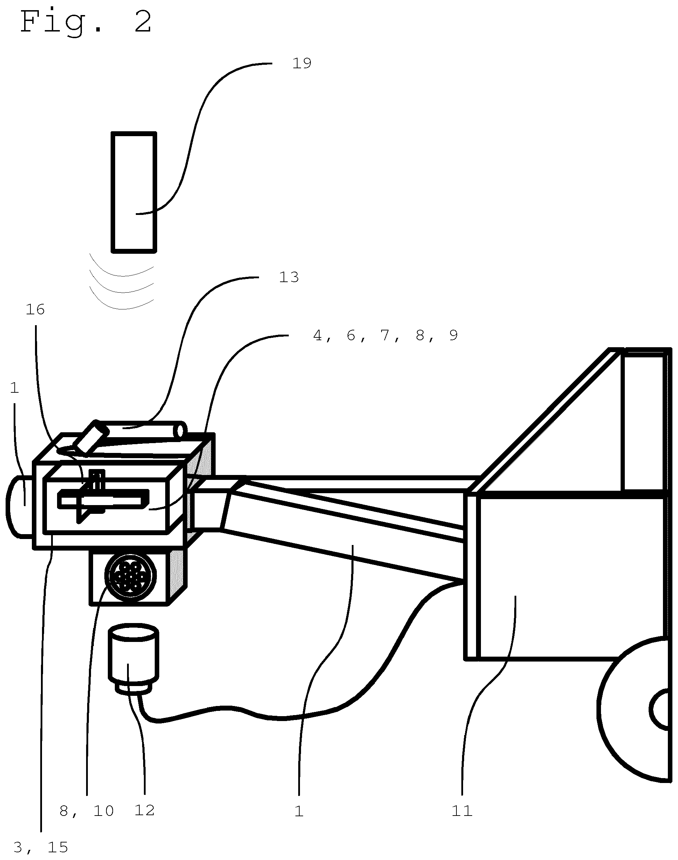

Die Figuren 1 und 2 zeigen ein Sicherungssystem, welches eine Schlossanordnung 3 in Form eines Kastens 15 mit einem elektromechanischen Schloss 4 umfasst.

An der Schlossanordnung 3 in Figur 2 ist ein Steckanschluss 10 für einen Fahrzeuganhängerstecker 12 vorhanden.

Wie in den Figuren 1 und 2 dargestellt, ist jeweils in die Schlossanordnung 3 das Zugmaul 1 des Fahrzeuganhängers 11 eingeschoben und mittels eines Schließriegels 18 des elektromechanischen Schloss 4 veriegelbaren Stabes 16 oder Bolzens 16 oder Riegels 16 gegen eine unberechtigte Entnahme gesperrt. Das elektromechanische Schloss 4 umfasst eine drahtlose Kommunikationsschnittstelle 6, beispielsweise Bluetooth zur Kommunikation mit einem mobilen Endgerät 19. Weiterhin kann ein Zugang zum Internet und vorzugsweise eine Datenerfassungs- und/oder Datenverarbeitungseinheit 7 vorhanden sein. Hiermit können die Zugänge administriert, Aktivitäten überwacht, und an eine zentrale Stelle übermittelt werden. Es ist damit auch möglich, dass elektromechanische Schloss 4 remote zu bedienen oder die Bedienung für einen Berechtigten zu ermöglichen.

Die Energieversorgung 8 für das Schloss 4 ist über Energiespeicher 9 vorhanden. Alternativ oder zusätzlich lässt sich die Energieversorgung 8 auch über das Bauwerk 2 umsetzen.

Über die Energieversorgung 8 lässt sich auch der in Figur 2 dargestellte Steckanschluss 10 mit Energie versorgen, um den Fahrzeuganhänger 11 mit etwaigen Verbrauchern, wie ein beleuchteter Werbeträger oder eine beleuchtete Werbefläche mit Energie versorgen zu können. Der Verbraucher kann auch eine Stützbatterie oder Hilfsbatterie als Energiespeicher 9 sein, welcher in der Zeit der Nichtbenutzung des Fahrzeuganhängers geladen wird.

Das elektromechanische Schloss 4 lässt sich auf unterschiedliche Weise bedienen, beispielsweise mittels eines Transponders oder mittels einer Anwendung, welche auf einem mobilen Endgerät 19, welches über das mobile Internet oder eine lokale, vorzugsweise drahtlose Datenverbindung, beispielsweise über Bluetooth oder NFC mit dem Schloss 4 oder der Datenerfassungs- und/oder Datenverarbeitungseinheit 7 sich zum Bedienen verbindet oder Zugangsdaten oder Entsperrdaten zur Verfügung stellt oder die Entsperrung des Schlosses 4 vornimmt.

Die Datenerfassungs- und/oder Datenverarbeitungseinheit 7 an der Schlossanordnung 3 oder am Schloss 4 ermöglicht somit das Vorhalten bzw. Verwalten von Zugangs- oder Entsperrdaten und den damit einhergehenden Nutzern und Nutzungsdaten.

Ein Abgleich von Zugangsdaten mit einer zentralen Datenerfassungs- und/oder Datenverarbeitungseinheit 7 mittels einer Netzwerkverbindung über die Kommunikationsschnittstelle 6, beispielsweise das mobile Internet ist ebenfalls vorgesehen.

In der Datenerfassungs- und/oder Datenverarbeitungseinheit 7 oder dem Schloss 4, welche als integrale Einheit ausgeführt sein können, lassen sich die Zugänge für berechtigte Nutzer hinterlegen. Als Redundanz für einen begrenzten Zeitraum lassen sich diese auch ohne Netzwerkverbindung nutzbar hinterlegen.

Die Datenerfassungs- und/oder Datenverarbeitungseinheit 7 und die Schlossanordnung 3 lassen sich ebenfalls als integrale Einheit ausführen.

Als weitere oder kombinierte Kommunikationsschnittstelle 6 für lokale, vorzugsweise drahtlose Datenverbindung kommen beispielsweise WLAN, Bluetooth, NFC oder andere Funktechnologien in Betracht.

Je nachdem, ob ein WLAN vorhanden ist, lässt sich der Zugang zum Internet über das jeweilige WLAN oder das mobile Internet realisieren.

Das Schloss 4 zur Verwendung an einem Sicherungssystem, wie in den Figuren 1 und 2 dargestellt, umfasst einen manuell und/oder motorisch linear verschiebbaren Schließriegel 18, der dazu ausgelegt ist einen Riegel 16 der Schlossanordnung 3 innerhalb des Schlosses 4 zu durchgreifen. Damit ist der der Schließriegel 18 durch das Gehäuse vom Schloss 4 eingehaust.

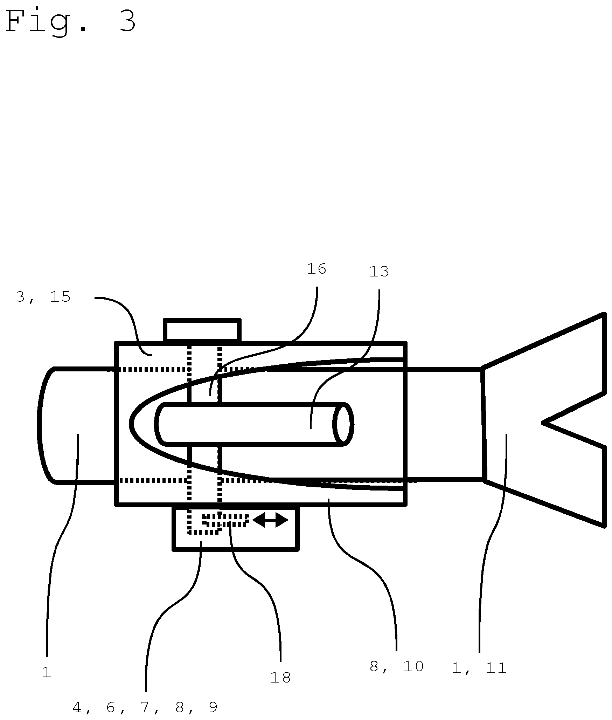

Die Figur 3 zeigt ein Sicherungssystem von oben. Das Sicherungssystem umfasst eine Schlossanordnung 3 in Form eines Kastens 15 mit einem elektromechanischen Schloss 4, welches eine Kommunikationsschnittstelle 6, eine Datenerfassungsund/oder Datenverarbeitungseinheit 7 sowie Energieversorgung 8 mit einen Energiespeicher 9 umfasst. An der Schlossanordnung 3 ist an deren Unterseite weiterhin ein Steckanschluss 10 für einen Fahrzeuganhängerstecker 12 vorhanden. In die Schlossanordnung 3 ist das Zugmaul 1 des Fahrzeuganhängers 11 eingeschoben und mittels des Schließriegel 18 des im elektromechanischen Schlosses 4 veriegelbaren Stabes 16 oder Bolzens 16 gegen eine unberechtigte Entnahme gesperrt. Der schwenkbare oder verschiebbare Schließriegel 18 greift in eine Aussparung am Stab 16 oder Bolzen 16. Der Kasten 15 der Schlossanordnung 3 ist im oberen Bereich bereichsweise geöffnet, um das Zugmaul 1 mit dem Griff 13 bequem einzufädeln oder herauszuziehen zu können.

In Figur 4 ist abweichend zu den Figuren 1 und 2 der Kasten 15 der Schlossanordnung 3 auch oben geschlossen. Der Griff 13 des Zugmauls 1 wird vom Kasten 15 mit umschlossen. Der Kasten 15 ist dafür etwas höher als bei der oben bereichsweise geöffneten Variante ausgeführt. Das Zugmaul 1 liegt auf der unteren Wandung des Kasten 15 innen auf. Nach oben wird die Bewegung des Zugmauls 1 im gesicherten oder gesperrten Zustand durch den im Schloss 4 manuell und/oder motorisch schwenkbaren oder linear verschiebbaren Schließriegel 18 gesperrten Bolzen 16 oder Riegel 16 begrenzt, so dass eine Entnahme verhindert wird. Der Vorteil diese Anordnung ist, dass der Bolzen 16 oder Riegel 16 ebenfalls vom Kasten 15 mit umschlossen ist und somit ein Durchtrennen des Bolzens 16 oder Riegels 16 für eine unberechtigte Entnahme oder einen Diebstahl verhindert oder zumindest erheblich erschwert. Dass Schloss 4 bzw. die Schlossanordnung 4 ist hierbei von der Schlossanordnung 3 entfernbar.

Eine zu einem Kasten 15 einer Schlossanordnung 3 alternative Ausführung ist in der Figur 5 dargestellt. Hierbei sind als Schlossanordnung 3 an einem Bauwerk 2 zueinander beabstandete Platten 14 nebeneinander in gleicher Höhe, jeweils senkrecht und zueinander parallel angeordnet. In der Flucht zwischen den Platten 14 ist am Bauwerk 2 ein Kupplungskugelkopf 5 angeordnet. Das Zugmaul 1 des jeweiligen Fahrzeuganhängers 11 lässt sich somit vom Kupplungskugelkopf 5 abnehmen oder auf diesen aufsetzen. Der Kupplungskugelkopf 5 ist in einer entsprechenden Höhe angeordnet, so dass bei dem auf den Kupplungskugelkopf 5 nur aufgesetzten oder an den Kupplungskugelkopf 5 eingeklingten Zugmaul 1 der Bolzen 16 oder Riegel 16 zwischen dem Zugmaul 1 und dem Griff 13 von einer der Platten 14 zur anderen Platte 14 geführt ist und somit eine Bewegung durch den Kupplungskugelkopf 5 und den Bolzen 16 oder Riegel 16 begrenzt wird. Der Bolzen 16 oder Riegel 16 ist jeweils durch die Platten 14 geführt und mündet auf einer Seite im Schloss 4 und wird dort vom Schließriegel (nicht dargestellt) verriegelt. Am Bauwerk 2, was eine Wand eines Hauses oder eines Carport ist zudem der Steckanschluss 10 für den Fahrzeuganhängerstecker 12 des Fahrzeuganhängers 11 angeordnet.

Unabhängig von der Ausführung der Schlossanordnung 3 wird in Bezug auf das elektronische Schloss 4, Kommunikationsschnittstelle 6, Datenerfassungs- und/oder Datenverarbeitungseinheit 7, die Energieversorgung 8 und der Energiespeicher 9 auf das oben geschriebene Bezug genommen, da die Funktionsweisen unabhängig von der Ausführung der Schlossanordnung 3 übertragbar sind.

Unabhängig von einer der Ausführungen der Schlossanordnung 3 ist der Stab 16, Bolzen 16 oder Riegel 16 beispielsweise auf der des Schlosses 4 gegenüberliegenden Seite abgewinkelt oder hutförmig oder flanschartig geweitet, wie dies in Figuren 3 dargestellt ist.

Das erfindungsgemäße Schloss 4 oder Schließsystem 4 zur Verwendung am erfindungsgemäßen Sicherungssystem sieht einen manuell schwenkbarer oder linear verschiebbarer Schließriegel 18 vor, der dazu ausgelegt ist, einen Stab 16, Bolzen 16 oder Riegel 16 einer Schlossanordnung 3 innerhalb oder außerhalb des Schlosses 4 zu durchgreifen oder zu hintergreifen oder einzugreifen, wobei der Schließriegel 18 zumindest in Schließstellung blockierbar ist. Die Blockierung kann in Schließstellung mittels Schwerkraft frei fallend sein und nur elektromagnetisch oder mittels eines Antriebes wieder gelöst werden.

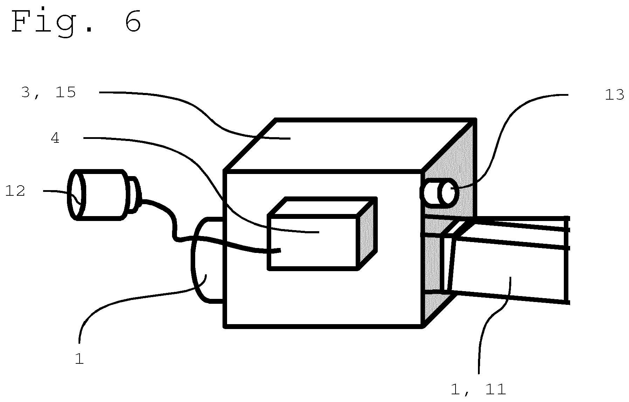

In Figur 6 ist ergänzend und abweichend zur Figur 4 am Schloss 4 an einem entsprechenden Kabel ein Fahrzeuganhängerstecker 12 vorhanden, welches an das Zugfahrzeug (nicht dargestellt) an den oder einen Steckanschluss (nicht dargestellt) ansteckbar ist, so dass über das Zugfahrzeug (nicht dargestellt) eine Energieversorgung (nicht dargestellt) gegeben ist. Neben oder alternativ zu einem Fahrzeuganhängerstecker 12 und einem Steckanschluss kann auch eine andere elektrische Energie liefernde Steckdose oder andere Anschlüsse im Zugfahrzeug für eine Energieversorgung, wie Zigarettenanzünderbuchsen oder USB-Anschlüsse genutzt werden. Der Fahrzeuganhängerstecker (nicht dargestellt) des Fahrzeuganhänger 11 lässt sich an der Schlossanordnung 3 zur Anwesenheitskontrolle an einem Steckanschluss (nicht dargestellt) anstecken.

### Zusammenstellung der Bezugszeichen

- 1 -: Zugmaul
- 2 -: Bauwerk
- 3 -: Schlossanordnung
- 4 -: Schloss, Schließsystem
- 5 -: Kupplungskugelkopf
- 6 -: Kommunikationsschnittstelle
- 7 -: Datenerfassungs- und/oder Datenverarbeitungseinheit
- 8 -: Energieversorgung
- 9 -: Energiespeicher
- 10 -: Steckanschluss
- 11 -: Fahrzeuganhänger
- 12 -: Fahrzeuganhängerstecker
- 13 -: Griff
- 14 -: Platte
- 15 -: Kasten
- 16 -: Stab, Bolzen, Riegel
- 17 -: Profil
- 18 -: Schließriegel
- 19 -: mobiles Endgerät

## Patentansprüche

1. Mobiles Sicherungssystem eines an Zugfahrzeuge kuppelbare Fahrzeuganhängers (11), wobei eine am oder um das Zugmaul (1) und/oder die Deichsel (1) anordbare Schlossanordnung (3) vorgesehen ist, wobei die Schlossanordnung (3) mittels eines elektromechanischen Schlosses (4) oder Schließsystems (4) für den Berechtigten entsperrbar und/oder sperrbar ist,
**dadurch gekennzeichnet,**
**dass** ein Schließriegel (18) zum Sperren oder Blockieren eines sperrenden Elementes (16) des Schlosses (4) oder des Schließsystems (4) zumindest in Schließstellung blockierbar ist und dass die Blockierung des Schließriegels (18) elektromagnetisch lösbar ist und der Schließriegel von Hand betätigbar ist, wobei der Schließriegel eigenständig oder selbsttätig durch Schwerkraft oder anderweitig mechanisch in eine blockierende Position fällt oder schnappt.

2. Sicherungssystem nach Anspruch 1,
**dadurch gekennzeichnet ,**
**dass** der Schließriegel (18) eingehaust oder umhaust ist.

3. Sicherungssystem nach Anspruch 1 und 2,
**dadurch gekennzeichnet ,**
**dass** die Schlossanordnung (3) mit einem Bauwerk (2) verbindbar ist.

4. Sicherungssystem nach einem der vorhergehenden Ansprüche,
**dadurch gekennzeichnet ,**
**dass** die Schlossanordnung (3) oder das Bauwerk (2) einen Kupplungskugelkopf (5) aufweist.

5. Sicherungssystem nach einem der vorhergehenden Ansprüche,
**dadurch gekennzeichnet ,**
**dass** das Schloss (4) durch den Berechtigten kontaktlos und/oder remote und/oder mittels eines Zugfahrzeuges entsperrbar und sperrbar ist.

6. Sicherungssystem nach einem der vorhergehenden Ansprüche,
**dadurch gekennzeichnet ,**
**dass** das Schloss (4) zumindest eine drahtgebundene oder drahtlose Kommunikationsschnittstelle (6) umfasst und/oder einen Zugang zum Internet und/oder eine Verbindung zum Zugfahrzeug aufweist.

7. Sicherungssystem nach einem der vorhergehenden Ansprüche,
**dadurch gekennzeichnet ,**
**dass** die Schlossanordnung (3) oder das Schloss (4) und/oder das Bauwerk (2) und/oder der Fahrzeuganhänger (11) und/oder das Zugfahrzeug zumindest eine Datenerfassungs- und/oder Datenverarbeitungseinheit (7) oder eine Verbindung oder eine Schnittstelle zu einer Datenerfassungs- und/oder Datenverarbeitungseinheit (7) aufweist.

8. Sicherungssystem nach einem der vorhergehenden Ansprüche,
**dadurch gekennzeichnet ,**
**dass** eine Energieversorgung (8) für die Schlossanordnung (3) oder das Schloss (4) und/oder für den Fahrzeuganhänger (11) mittels Energiespeicher (9) und/oder über das Bauwerk (2) und/oder über das Zugfahrzeug oder über die Bordelektronik des Zugfahrzeugs vorhanden ist.

9. Sicherungssystem nach einem der vorhergehenden Ansprüche,
**dadurch gekennzeichnet ,**
**dass** eine Anwesenheitskontrolle vorgesehen ist, wobei die Anwesenheitskontrolle berührungslos und/oder über die Bordelektronik und/oder die Verkabelung des Fahrzeuganhängers (11) und/oder mittels Sensoren vorgesehen ist.

10. Sicherungssystem nach einem der vorhergehenden Ansprüche,
**dadurch gekennzeichnet ,**
**dass** an der Schlossanordnung (3) oder am Bauwerk (2) ein Steckanschluss (10) für einen Fahrzeuganhängerstecker (12) vorhanden ist.

11. Sicherungssystem nach einem der vorhergehenden Ansprüche,
**dadurch gekennzeichnet ,**
**dass** ein Ortungssystem des Fahrzeuganhängers (1) auslesbar und/oder dass zumindest ein beleuchteter Werbeträger oder eine beleuchtete Werbefläche am Fahrzeuganhänger (11) betreibbar ist.

12. Schloss (4) oder Schließsystem (4) bei Verwendung an einem Sicherungssystem nach einem der Ansprüche 1 bis 10,
wobei ein manuell und/oder motorisch schwenkbarer oder linear verschiebbarer Schließriegel (18) vorgesehen ist, wobei der Schließriegel (18) dazu ausgelegt ist, einen Stab (16), Bolzen (16) oder Riegel (16) als sperrendes Element einer Schlossanordnung (3) innerhalb oder außerhalb des Schlosses (4) zu durchgreifen oder einzugreifen, wobei der Schließriegel (18) zumindest in Schließstellung blockierbar ist und dass mittels eines Elektromagneten eine Sperre lösbar ist und der Schließriegel von Hand betätigbar ist, wobei der Schließriegel eigenständig oder selbsttätig durch Schwerkraft oder anderweitig mechanisch in eine blockierende Position fällt oder schnappt und der Schließriegel geradlinig langestreckt ein Rundprofil oder ein eckiges Profil ist oder die Form eines Stabes aufweist, so dass der Schließriegel linear verschiebbar ist.

13. Schloss (4) oder Schließsystem (4) nach Anspruch 12,
**dadurch gekennzeichnet ,**
**dass** der Schließriegel (18) durch ein Gehäuse oder vom Schloss (4) oder vom Schließsystem (4) eingehaust oder umhaust ist.

## Claims

1. Mobile security system for a vehicle trailer (11) that can be coupled to towing vehicles, wherein a lock arrangement (3) is provided that can be arranged on or around the towing jaw (1) and/or the drawbar (1), wherein the lock arrangement (3) can be unlocked and/or locked by the authorised person by means of an electromechanical lock (4) or locking system (4),
**characterised in**
**that** a locking bolt (18) for locking or blocking a locking element (16) of the lock (4) or the locking system (4) can be blocked at least in the locked position, and in that the locking of the locking bolt (18) can be released electromagnetically and the locking bolt can be operated manually, whereby the locking bolt falls or snaps into a blocking position independently or automatically by gravity or other mechanical means.

2. Securing system according to claim 1.,
**characterised in**
**that** the locking bolt (18) is enclosed or surrounded.

3. Securing system according to claim 1 or 2,
**characterised in**
**that** the lock arrangement (3) can be connected to a structure (2).

4. Securing system according to one of the above claims,
**characterised in**
the lock arrangement (3) or the structure (2) has a coupling ball head (5).

5. Securing system according to one of the above claims,
**characterised in**
**that** the lock (4) can be unlocked and locked by the authorised person without contact and/or remotely and/or by means of a towing vehicle.

6. Securing system according to one of the above claims,
**characterised in**
**that** the lock (4) comprises at least one wired or wireless communication interface (6) and/or has access to the Internet and/or a connection to the towing vehicle.

7. Securing system according to one of the above claims,
**characterised in**
**that** the lock arrangement (3) or the lock (4) and/or the structure (2) and/or the vehicle trailer (11) and/or the towing vehicle has at least one data acquisition and/or data processing unit (7) or a connection or an interface to a data acquisition and/or data processing unit (7).

8. Securing system according to one of the above claims,
**characterised in**
**that** a power supply (8) for the lock arrangement (3) or the lock (4) and/or for the vehicle trailer (11) is provided by means of an energy storage device (9) and/or via the structure (2) and/or via the towing vehicle or via the on-board electronics of the towing vehicle.

9. Securing system according to one of the above claims,
**characterised in**
**that** an attendance check is provided, wherein the attendance check is provided contactlessly and/or via the on-board electronics and/or the cabling of the vehicle trailer (11) and/or by means of sensors.

10. Securing system according to one of the above claims,
**characterised in**
**that** a plug connection (10) for a vehicle trailer plug (12) is provided on the lock arrangement (3) or on the structure (2).

11. Securing system according to one of the above claims,
**characterised in**
**that** a locating system of the vehicle trailer (1) can be read and/or in that at least one illuminated advertising medium or an illuminated advertising surface can be operated on the vehicle trailer (11).

12. Lock (4) or locking system (4) for use in a security system according to one of claims 1 to 10,
wherein a manually and/or motor-driven pivotable or linearly movable locking bolt (18) is provided, wherein the locking bolt (18) is designed to engage or interlock with a bar (16), bolt (16) or latch (16) as a locking element of a lock arrangement (3) inside or outside the lock (4), wherein the locking bolt (18) can be blocked at least in the locked position and a lock can be released by means of an electromagnet and the locking bolt can be operated manually, wherein the locking bolt falls or snaps into a blocking position independently or automatically by gravity or other mechanical means and the locking bolt is elongated in a straight line and has a round or angular profile or the shape of a rod, so that the locking bolt can be moved linearly.

13. Lock (4) or locking system (4) according to claim (12),
**characterised in**
**that** the locking bolt (18) is enclosed or surrounded by a housing or by the lock (4) or by the locking system (4).

## Revendications

1. Système de sécurité mobile d'une remorque de véhicule (11) pouvant être accouplée à des véhicules de traction, un dispositif de verrouillage (3) pouvant être disposé sur ou autour de la chape d'attelage (1) et/ou du timon (1) étant prévu, le dispositif de verrouillage (3) pouvant être déverrouillé et/ou bloqué pour l'utilisateur autorisé au moyen d'une serrure (4) ou d'un système de verrouillage (4) électromécanique,
**caractérisé en ce**
**qu'**un pêne de verrouillage (18) destiné à bloquer ou à bloquer un élément de blocage (16) de la serrure (4) ou du système de verrouillage (4) peut être bloqué au moins en position de fermeture et en ce que le blocage du pêne de verrouillage (18) peut être débloqué de manière électromagnétique et le pêne de verrouillage peut être actionné manuellement, le pêne de verrouillage tombant ou s'encliquetant dans une position de blocage de manière autonome ou automatiquement sous l'effet de la gravité ou d'une autre manière mécanique.

2. Système de sécurité selon la revendication 1,
**caractérisé en ce**
**que** le pêne de verrouillage (18) est encastré ou enveloppé.

3. Système de sécurité selon les revendications 1 et 2,
**caractérisé en ce**
**que** le dispositif de verrouillage (3) peut être relié à une structure (2).

4. Système de sécurité selon l'une des revendications précédentes,
**caractérisé en ce**
**que** le dispositif de verrouillage (3) ou la structure (2) présente une boule d'attelage (5).

5. Système de sécurité selon l'une des revendications précédentes,
**caractérisé en ce**
**que** la serrure (4) peut être déverrouillée et bloquée par la personne autorisée, sans contact et/ou à distance et/ou au moyen d'un véhicule tracteur.

6. Système de sécurité selon l'une des revendications précédentes,
**caractérisé en ce**
**que** la serrure (4) comprend au moins une interface de communication (6) filaire ou sans fil et/ou présente un accès à Internet et/ou une connexion au véhicule tracteur.

7. Système de sécurité selon l'une des revendications précédentes,
**caractérisé en ce**
**que** le dispositif de verrouillage (3) ou la serrure (4) et/ou la structure (2) et/ou la remorque de véhicule (11) et/ou le véhicule tracteur présente au moins une unité de saisie et/ou de traitement de données (7) ou une liaison ou une interface vers une unité de saisie et/ou de traitement de données (7).

8. Système de sécurité selon l'une des revendications précédentes,
**caractérisé en ce**
**qu'**il existe une alimentation en énergie (8) pour le dispositif de verrouillage (3) ou la serrure (4) et/ou pour la remorque de véhicule (11) au moyen d'un accumulateur d'énergie (9) et/ou par l'intermédiaire de la structure (2) et/ou par l'intermédiaire du véhicule tracteur ou par l'intermédiaire de l'électronique de bord du véhicule tracteur.

9. Système de sécurité selon l'une des revendications précédentes,
**caractérisé en ce**
**qu'**il est prévu un contrôle de présence, le contrôle de présence étant prévu sans contact et/ou par l'intermédiaire de l'électronique embarquée et/ou du câblage de la remorque de véhicule (11) et/ou au moyen de capteurs.

10. Système de sécurité selon l'une des revendications précédentes,
**caractérisé en ce**
**qu'**une prise (10) est présente sur le dispositif de verrouillage (3) ou sur la structure (2) pour un connecteur de remorque de véhicule (12).

11. Système de sécurité selon l'une des revendications précédentes,
**caractérisé en ce**
**qu'**un système de géolocalisation de la remorque de véhicule (1) est lisible et/ou qu'au moins un support publicitaire lumineux ou un panneau publicitaire lumineux est exploitable sur la remorque de véhicule (11).

12. Serrure (4) ou système de verrouillage (4) utilisé sur un système de sécurité selon l'une des revendications 1 à 10,
dans lequel il est prévu un pêne de verrouillage (18) pouvant pivoter manuellement et/ou de manière motorisée ou pouvant être déplacé linéairement, le pêne de verrouillage (18) étant conçu pour traverser ou s'engager dans une tige (16), un boulon (16) ou un pêne (16) en tant qu'élément de blocage d'un dispositif de verrouillage (3) à l'intérieur ou à l'extérieur de la serrure (4), le pêne de verrouillage (18) pouvant être bloqué au moins en position de fermeture, et en ce qu'un blocage peut être libéré au moyen d'un électroaimant et le pêne de verrouillage peut être actionné manuellement, le pêne dormant tombant ou s'encliquetant dans une position de blocage de manière autonome ou automatiquement par gravité ou mécaniquement d'une autre manière, et le pêne dormant étant un profil rond ou un profil anguleux allongé en ligne droite ou présentant la forme d'une barre, de sorte que le pêne dormant peut être déplacé linéairement.

13. Serrure (4) ou système de verrouillage (4) selon la revendication 12,
**caractérisé en ce**
**que** le pêne de verrouillage (18) est encapsulé ou entouré par un boîtier ou par la serrure (4) ou le système de verrouillage (4).
